Europäisches Patentamt

European Patent Office

Office européen des brevets

(11) Veröffentlichungsnummer: **0 300 192**
**A2**

## (12) EUROPÄISCHE PATENTANMELDUNG

(21) Anmeldenummer: 88109507.9

(22) Anmeldetag: 15.06.88

(51) Int. Cl.⁴: **B29C 49/22 , B29C 49/48**

(30) Priorität: 18.07.87 DE 3723870

(43) Veröffentlichungstag der Anmeldung:
25.01.89 Patentblatt 89/04

(84) Benannte Vertragsstaaten:
**BE CH DE FR GB LI NL**

(71) Anmelder: **STELIOPLAST ROLAND STENGEL KUNSTSTOFFVERARBEITUNG GMBH**
**Industriestrasse 6-8**
**D-5561 Binsfeld(DE)**

(72) Erfinder: **Stengel, Roland**
**Industriestrasse 6-8**
**D-5561 Binsfeld(DE)**

(74) Vertreter: **Schönherr, Wolfgang et al**
**Patentanwälte Wolfgang Schönherr Dipl.-Ing.**
**Karl-Heinz Serwe Hawstrasse 28**
**D-5500 Trier(DE)**

(54) Verfahren zur Herstellung von coextrudierten Behältern sowie Blastorm zur Duchführung des Verfahrens.

(57) Bei der Herstellung von Kunststoffkanistern aus mehrschichtigen Kunststoffschläuchen liegen die schlecht miteinander verschweißbaren inneren Schichten aufeinander, so daß die Nahtfestigkeit der entstehenden Nähte und damit die Behälterstabilität sehr unbefriedigend ist.

Im Bereich der Nähte werden die jeweils miteinander zu verschweißenden Schlauchwandungen derartig von der sich schließenden Blasform aufgestaucht, daß die jeweils miteinander verschweißbaren Schichten des zu einem Behälter aufzublasenden Schlauchabschnittes miteinander in Berührung gelangen und miteinander verschweißen.

Fig. 1

## Verfahren zur Herstellung von coextrudierten Behältern sowie Blasform zur Durchführung des Verfahrens

Die Erfindung betrifft ein Verfahren zur Herstellung von coextrudierten Behältern aus einem innenbeschichteten, Kunststoffbarriereschichten aufweisenden, mehrschichtigen Schlauch durch Aufblasen des erhitzten Schlauches in einer Blasform und Verschweißen der Randabschnitte des Schlauches zu einer Naht, insbesondere im Boden und/oder Kopf des Behälters, sowie eine Blasform zur Durchführung des Verfahrens.

Coextrudierte Behälter werden aus mehrschichtigen Kunststoffschläuchen hergestellt, wobei insbesondere die aus einem sehr dichten Werkstoff bestehenden Innenschichten aufgrund ihres Werkstoffes sehr schlecht miteinander verschweißbar sind.

Bei den bisher bekannten Verfahren werden die Endabschnitte des für den Behälter bestimmten Schlauchabschnittes von der Blasform flach aufeinanderliegend zusammengedrückt und durch Erhitzen miteinander verschweißt, so daß eine Bodennaht und/oder eine Kopfnaht im oberen Griffbereich des Behälters entsteht.

Bei diesen bekannten Verfahren liegen jedoch nun gerade die schlecht miteinander verschweißbaren inneren Barriereschichten aufeinander, so daß die Nahtfestigkeit der entstehenden Nähte und damit die Behälterstabilität sehr unbefriedigend ist. Die Erfahrung hat gezeigt, daß beim Fallen oder Stauchen des Behälters vor allem die Nähte am Behälterboden und im Bereich des Behältergriffes oftmals aufplatzen.

Die Aufgabe der Erfindung besteht daher darin, ein Verfahren der eingangs genannten Art und eine zur Durchführung des Verfahrens geeignete Blasform derart weiterzuentwickeln, daß die Schweißnähte des Behälters eine hohe Festigkeit aufweisen.

Die Aufgabe wird dadurch gelöst, daß im Bereich der Nähte die jeweils miteinander zu verschweißenden Schlauchwandungen derartig von der sich schließenden Blasform aufgestaucht werden, daß die jeweils miteinander verschweißbaren Schichten des zu einem Behälter aufzublasenden Schlauchabschnittes miteinander in Berührung gelangen und miteinander verschweißen.

Bei einer vorteilhaften Blasform zur Durchführung des Verfahrens weisen die Werkzeughälften der Blasform in Bereich der Naht derartige Abschrägungen auf, daß die Blasform in geschlossenem Zustand eine zum Inneren der Blasform hin offene V-förmige Ausnehmung hat.

Vorteilhaft sind die zum Äußeren der Blasform gerichteten Endabschnitte der Abschrägungen der beiden Werkzeughälften als miteinander zusammenwirkende Schneidkanten ausgebildet.

Vorteilhaft sind in dem zum Äußeren der Blasform hin gelegenen Freiraum im Abstand zu den Schneidkanten in den Freiraum ragende, miteinander zusammenwirkende Staubalken angeordnet. Vorzugsweise sind mehrere im Abstand zueinander angeordnete Staubalken im Freiraum vorgesehen.

Bei einer bevorzugten Ausführungsform der Blasform sind die den Abschrägungen benachbarten, den Behälterboden beiderseits der Bodennaht formenden Abschnitte der Werkzeughälften zur jeweiligen Abschrägung hin schräg nach oben, zum Inneren der Blasform verlaufend ausgebildet.

Eine erfindungsgemäße Blasform ist in der Zeichnung beispielhaft dargestellt. Es zeigen:

Fig. 1 den unteren Abschnitt eines Behälterbodens im Schnitt und

Fig. 2 den unteren Abschnitt der Werkzeughälften einer Blasform im Schnitt bei geöffneter Blasform.

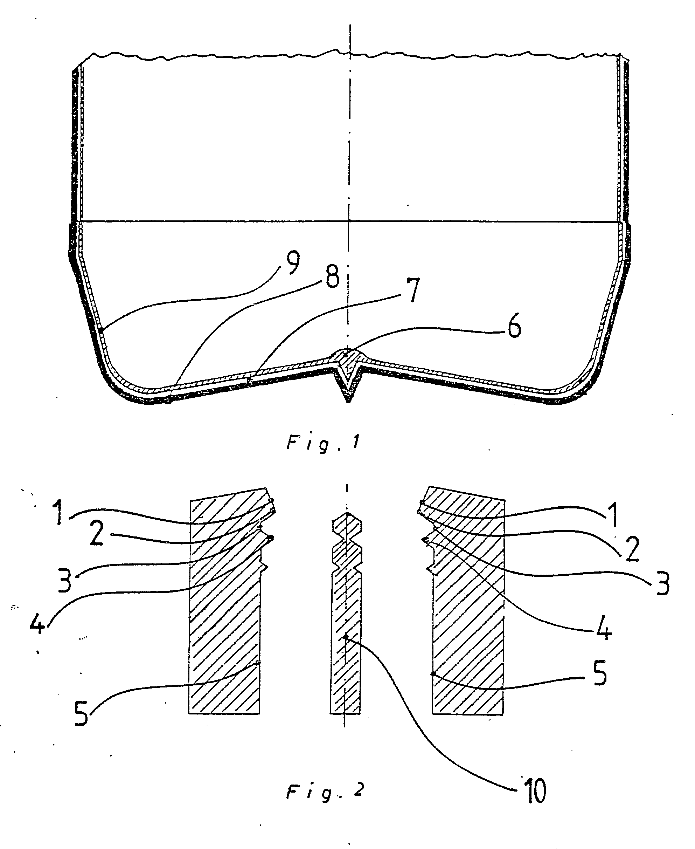

Nach Fig. 2 weisen die Werkzeughälften einer Blasform im Bereich der herzustellenden Bodennaht zwei Abschrägungen (1) auf, die bei geschlossener Blasform eine zum Inneren der Blasform hin offene V-förmige Ausnehmung bilden. Wie die Fig. 2 weiter zeigt, sind die zum Äußeren der Blasform gerichteten unteren Endabschnitte der Abschrägungen (1) der beiden Werkzeughälften als miteinander zusammenwirkende Schneidkanten (2) ausgebildet.

In den zum Äußeren der Blasform hin gelegenen Freiraum (5) unterhalb der Schneidkanten (2) ragen im Abstand zu den Schneidkanten miteinander zusammenwirkende Staubalken (4), so daß zwischen den Staubalken (4) und den Schneidkanten (2) ein Kompressionsraum (3) ausgebildet ist. Wie die Fig. 2 weiter zeigt, sind unterhalb der Staubalken (4) im Abstand zu den Staubalken weitere miteinander zusammenwirkende Staubalken geringerer Höhe angeordnet.

Wie die Fig. 1 zeigt, besteht ein coextrudierter Behälter aus mehreren Schichten. Auf eine innere Barriere-Schicht (9) folgt eine Haftvermittlerschicht (7), die die Barriere-Schicht (9) mit der äußeren Trägerschicht (8) des Behälters verbindet.

Zur Herstellung eines coextrudierten Behälters wird ein oben und unten offener Schlauchabschnitt mit einem derartigen mehrschichtigen Aufbau in eine Blasform eingeführt, wobei der untere Abschnitt des Schlauchabschnittes in den Freiraum (5) ragt. Nach Schließen und Aufheizen der Blasform wird der Schlauchabschnitt durch Aufblasen zu einem Kanister geformt.

Während der Schließbewegung der beiden Werkzeughälften der Blasform wird durch die Abschrägungen (1) das zu verschweißende Kunststoffmaterial im Bereich der Bodennaht (6) aufgestaucht, wobei der Werkstoff aufgrund der Staubalken (4) durch den Kompressionsraum (3) über die Schneidkanten in die V-förmige Ausnehmung der Abschrägungen (1) hineingepreßt wird. Die Staubalken (4) verhindern dabei, daß der Werkstoff in den Freiraum (5) entweicht. Die Schneidkanten (2) trennen den im Freiraum (5) entstehenden Butzen (10) vollständig vom Behälterboden.

Durch die Aufstauchung der Bodennaht (6) ergibt sich im Inneren des Behälters eine glatte Innenfläche, wie dies Fig. 1 zeigt, so daß jegliches Absetzen von Kristallen oder Füllmedien verhindert wird und somit eine umweltfreundliche Entsorgung der gebrauchten Behälter möglich ist. Die Aufstauchung bewirkt weiterhin, daß die miteinander verschweißbaren Schichten, also beispielsweise die äußere Trägerschicht (8) der einen und der anderen Seite des Schlauchabschnittes, im Bereich der Schweißnaht miteinander in Berührung kommen und so miteinander verschweißen. Vorteilhaft ist außerdem, daß mit dem erfindungsgemäßen Verfahren ein Verarbeiten von Barriere-Werkstoffen ohne Stickstoffatmosphäre möglich ist. Vorteilhaft sind so die sehr harten und zähen Sperrschichtmaterialien miteinander zu verschweißen, so daß Behälter mit hoher Nahtfestigkeit und Behälterstabilität hergestellt werden können.

## Ansprüche

1. Verfahren zur Herstellung von coextrudierten Behältern aus einem innenbeschichteten, Kunststoffbarriereschichten aufweisenden, mehrschichtigen Schlauchabschnitt durch Aufblasen des erhitzten Schlauchabschnittes in einer Blasform und Verschweißen der Randabschnitte des Schlauchabschnittes zu einer Naht, insbesondere am Boden und/oder Kopf des Behälters, dadurch gekennzeichnet, daß im Bereich der Naht die jeweils miteinander zu verschweißenden Schlauchwandungen derartig von der sich schließenden Blasform aufgestaucht werden, daß die miteinander verschweißbaren Schichten des zu einem Behälter aufzublasenden Schlauchabschnittes miteinander in Berührung gelangen und miteinander verschweißen.

2. Blasform zur Durchführung des Verfahrens nach Anspruch 1, dadurch gekennzeichnet, daß die Werkzeughälften der Blasform im Bereich der Naht derartige Abschrägungen (1) aufweisen, daß die Blasform in geschlossenem Zustand eine zum Inneren der Blasform hin offene V-förmige Ausnehmung hat.

3. Blasform nach Anspruch 2, dadurch gekennzeichnet, daß die zum Äußeren der Blasform gerichteten Endabschnitte der Abschrägungen (1) der beiden Werkzeughälften als miteinander zusammenwirkende Schneidkanten (2) ausgebildet sind.

4. Blasform nach Anspruch 2 oder 3, dadurch gekennzeichnet, daß in dem zum Äußeren der Blasform gelegenen Freiraum (5) im Abstand zu den Abschrägungen (1) in den Freiraum ragende, miteinander zusammenwirkende Staubalken (4) angeordnet sind.

5. Blasform nach einem der Ansprüche 2 bis 4, dadurch gekennzeichnet, daß mehrere im Abstand zueinander angeordnete Staubalken (4) im Freiraum (5) vorgesehen sind.

6. Blasform nach einem der Ansprüche 2 bis 5, dadurch gekennzeichnet, daß die den Abschrägungen (1) benachbarten, den Behälterboden beiderseits der Bodennaht (6) formenden Abschnitte der Werkzeughälften zur jeweiligen Abschrägung hin schräg nach oben zum Inneren der Blasform verlaufend ausgebildet sind.

Fig. 1

Fig. 2